# EUROPEAN PATENT APPLICATION

(11) **EP 2 468 820 A1**
(43) Date of publication of application: **27.06.2012**
(21) Application number: 10196930.1
(22) Date of filing: 23.12.2010
(51) Int. Cl.: C08L 69/00, C08G 64/00, C08K 3/20

(54) **Polycarbonate compositions with improved flame resistance**

(71) Applicant: Bayer MaterialScience AG, 51368 Leverkusen (DE)
(72) Inventor: The designation of the inventor has not yet been filed

(57) **Abstract**

The present invention relates to compositions containing polycarbonate, at least one metal hydroxides and at least phosphorous-containing flameproofing additive which show good flow properties, a high transparency and translucency and also have a good rating in UL-test regarding the resistance to flammability, wherein the compositions contain
A. 70.0 to 100,0 pbw of at least one polycarbonate,
B. 5.0 to 25.0 pbw of at least one phosphorous-based flame retardant,
C. 1.5 to 4.5 pbw of one or more metal hydroxides.

## Description

The present invention relates to compositions containing polycarbonate, at least one metal hydroxide and at least phosphorous-containing flameproofing additive which show good flow properties, a high transparency and translucency and also have a good rating in UL-test regarding the resistance to flammability.

Flameproofed synthetic moulding materials are employed for a large number of applications. Typical fields of application of such synthetic materials are electrical engineering and electronics, where they are employed, inter alia, for the purpose of producing carriers of voltage-carrying components or in the form of television housings and monitor housings. But flameproofed synthetic materials have also established themselves in the field of interior trims of rail vehicles and aircraft.

In addition to good flameproofing properties, the synthetic materials that are used in this field must also display further positive properties at a high level. These include a good flame resistance as well as good flow properties for molding and a high transparency and translucency as well as ,inter alia, good mechanical properties such as, for example, high impact strength and also sufficient long-term stability as regards thermal stress or as regards possible damage through the action of light, depending on the application area. Such a combination of properties is not easy to attain. Although the desired flame resistance in synthetic materials can, as a rule, be adjusted easily with the aid of flameproofing agents, relatively large quantities or the use of halogene containing compounds are often required for this purpose, which rapidly results in a drastic deterioration of other properties, such as mechanical properties for example or is unwanted for ecological and environmental reasons.

In the prior art transparent polycarbonate compositons with an MVR (300°C/3.2 kg) of about 12 comprising a C4-salt (e.g. potassium nona-fluoro-1-butanesulfonate) having a rating of UL-V0 at 3 mm thickness of sample are known. However, for use of polycarbonate having a higher MVR (better flow) antidripping agents like PTFE (polytetrafluoroethylen), which can be employed as aqueous dispersion or encapsulated in suitable polymers, have to be added to obtain UL-ratings of V0 instead of V2. While antidripping agents like PTFE significantly enhances the flame resistance, its refractive index also shows a large deviation from that of BPA (bisphenol A) based polycarbonate (1.35 vs 1.58) which yields a haze in the compositions even at PTFE-contents as low as 0,2 wt.%. Thus, haze is increased by an addition of 0.05 % PTFE by at least 10 %.

Moreover, flame retardant polycabonate compositions with halogenated flame retardants, eg. TBBA (Tetra Bromo Bisphenol A, as such or in oligomeric form) or other additives containing bromine are known.

However, for ecological reasons and the possible formation of toxic compounds upon combustion the use of halogenated compounds often is not accepted or limited to very small amounts like 900 ppm which is insufficient to achieve the desired flame resistance.

In this context CN 101469113 A discloses flame retardant, plasticized polycarbonate compositions with improved mechanical strength comprising plasticizers, phosphorous-based flame retardants, PTFE, antioxidants and further processing aids.

WO 2007/075780 A2 discloses flame retardant polycarbonate compositions comprising a fibrous reinforcing component, e.g. glass fibers, a flame retardant comprising a phosphorous-based flame retardant, and a synergist composition. The compositions have a heat distortion temperature of greater or equal to 75°C when subjected to a deforming force of about 1.8 megapascal.

JP 2003082238 A describes flame retardant polymer compositon comprising flame retardants and inorganic compounds with an average particle diameter of 1 - 100 nm. The composition has good extrusion stability, scratch resistance and an Izod impact strength of 460 J/m.

An object of the present invention is the provision of transparent polycarbonate compositions containing that exhibit improved flameproofing properties along with good flowability. In particular it is an object of the invention to provide compositions having a UL-V0-rating measured on test specimen of 0.8 mm.

Surprisingly it has been found that the carbonate compositions comprising a phosphorous based flame retardant and an metal hydroxide solve the underlying problem of the present invention, in spite of the general notion that due to alkaline properties of the metal hydroxids the polycarbonate matrix should degrade and flame retardancy, in particular because of dripping, should deteriorate.

The present invention consequently relates to a composition containing
A) 70.0 -100.0 parts by weight (pbw), preferably 80.0 - 90.0 pbw polycarbonate,
B) 5.0 - 25.0 pbw, preferably 10.0 - 20.0 pbw, more preferred 12.0 - 16.0 pbw, phosphorous-based flame retardant, and
C) 1.5 - 4.5 pbw, preferably 2.0 - 4.0 pbw metal hydroxide,
wherein the single components are not restricted to a single component but also encompasses mixtures of components, for example polycarbonates having different molecular weights, different flame retardant additives or different metal hydroxides.

The compositions of the present invention may further comprise at least one additive like UV stabilisers, heat stabilisers, antistatic agents, dyes and pigments and mold release agents, preferable in an amount of 0.01 - 2.00 weight-%, preferably of 0.02 -1.00 weight-%.

In a preferred embodiment of the present invention the composition consists only of the aforementioned components.

The compositions of the present invention are essentially free of PTFE or mixtures and dispersions containing PTFE, and preferably the compositions are free of PTFE or mixtures and dispersions containing PTFE.

The compositions of the present invention are essentially free of nona-fluoro-1-butanesulfonate-based flame retardants, and preferably free of those compounds.

The compositions of the present invention have an MVR of 35 - 155, preferably of 40 to 150, and especially preferred of 60 to 90 measured at 260°C (10 min.) with a load of 2.16 kg.

The compositions of the present invention have a UL-rating of V0 for samples of a thickness of 3 mm, preferably for samples of a thickness of 1,5 mm, and especially preferred for samples of a thickness of 0,8 mm.

The compositions of the present invention have a haze measured with 1 mm samples < 55.0, preferably < 50.0, and especially preferred < 48.0.

The compositions of the present invention have a transmission > 83.0 at a thickness of 1 mm.

Such compositions can be employed advantageously in diverse applications. These include, for example, applications in the electrical/electronics field, such as, for example, lamp housings, electrical circuit-breakers, multipoint connectors or television and monitor housings. The compositions according to the invention may furthermore be employed in the form of sheets for architectural or industrial use, as trims of rail-vehicle and aircraft interiors, which in each instance are subject to stringent requirements in terms of flame resistance.

The present invention also relates to processes for producing the compositions as described above.

Finally the present invention is also directed at products containing a composition of the present invention.

Polycarbonates for the compositions according to the invention are homopolycarbonates, copolycarbonates and thermoplastic, preferably aromatic, polyester carbonates, which in the present application are subsumed under the term "polycarbonate".

The polycarbonates and copolycarbonates according to the invention generally have average molecular weights M̅_{w} (weight average) of 2000 to 200,000, preferably 3000 to 150,000, in particular 5000 to 100,000, most particularly preferably 10,000 to 30,000, in particular 10,000 to 28,000 and most particularly preferably average molecular weights M̅_{w} of 12,000 to 28,000 g/mol (determined by GPC (gel permeation chromatography) with polycarbonate calibration.

Regarding the production of polycarbonates for the compositions according to the invention reference is made here by way of example to Schnell, "Chemistry and Physics of Polycarbonates", Polymer Reviews, Vol. 9, Interscience Publishers, New York, London, Sydney 1964, to D.C. PREVORSEK, B.T. DEBONA and Y. KESTEN, Corporate Research Center, Allied Chemical Corporation, Morristown, New Jersey 07960, "Synthesis of Poly(ester)carbonate Copolymers" in Journal of Polymer Science, Polymer Chemistry Edition, Vol. 19, 75-90 (1980), to D. Freitag, U. Grigo, P.R. Müller, N. Nouvertne, BAYER AG, "Polycarbonates" in Encyclopedia of Polymer Science and Engineering, Vol. 11, Second Edition, 1988, pages 648-718 and finally to Drs. U. Grigo, K. Kircher and P.R. Müller "Polycarbonate" in Becker/Braun, Kunststoff-Handbuch, Vol. 3/1, Polycarbonate, Polyacetale, Polyester, Celluloseester, Carl Hanser Verlag Munich, Vienna 1992, pages 117-299. Production preferably takes place by the interfacial polycondensation process or the melt interesterification process and is described first by reference to the interfacial polycondensation process by way of example.

Preferred compounds to be used as starting compounds are bisphenols of the general formula (1)

HO-Z-OH (1)

wherein Z is a divalent organic radical having 6 to 30 carbon atoms and containing one or more aromatic groups.

Examples of such compounds are bisphenols belonging to the group of dihydroxydiphenyls, bis(hydroxyphenyl)alkanes, indane bisphenols, bis(hydroxyphenyl)ethers, bis(hydroxyphenyl)sulfones, bis(hydroxyphenyl)ketones and α,α'-bis(hydroxyphenyl) diisopropylbenzenes.

Particularly preferred bisphenols belonging to the aforementioned groups of compounds are bisphenol A, tetraalkylbisphenol A, 4,4-(meta-phenylene diisopropyl)diphenol (bisphenol M), 4,4-(para-phenylene diisopropyl)diphenol, N-phenyl isatin bisphenol, 1,1-bis-(4-hydroxyphenyl-3,3,5-trimethylcyclohexane (BP-TMC), bisphenols of the 2-hydrocarbyl-3,3-bis-(4-hydroxyaryl)phthalimidine type, in particular 2-phenyl-3,3-bis-(4-hydroxyphenyl)phthalimidine, and optionally mixtures thereof.

Homopolycarbonates based on bisphenol A and copolycarbonates based on the monomers bisphenol A and 1,1-bis-(4-hydroxyphenyl)-3,3,5-trimethylcyclohexane are particularly preferred. The bisphenol compounds for use according to the invention are reacted with carbonic acid compounds, in particular phosgene, or, in the melt interesterification process, with diphenyl carbonate or dimethyl carbonate.

Polyester carbonates are obtained by reacting the already cited bisphenols, at least one aromatic dicarboxylic acid and optionally carbonic acid equivalents. Suitable aromatic dicarboxylic acids are for example phthalic acid, terephthalic acid, isophthalic acid, 3,3'- or 4,4'-diphenyldicarboxylic acid and benzophenone dicarboxylic acids. A part, up to 80 mol%, preferably from 20 to 50 mol%, of the carbonate groups in the polycarbonates can be replaced by aromatic dicarboxylic acid ester groups.

Inert organic solvents used in the interfacial polycondensation process are for example dichloromethane, the various dichloroethanes and chloropropane compounds, tetrachloromethane, trichloromethane, chlorobenzene and chlorotoluene. Chlorobenzene or dichloromethane or mixtures of dichloromethane and chlorobenzene are preferably used.

The interfacial polycondensation reaction can be accelerated by means of catalysts such as tertiary amines, in particular N-alkyl piperidines or onium salts. Tributylamine, triethylamine and N-ethylpiperidine are preferably used. In the case of the melt interesterification process the catalysts cited in DE-A 42 38 123 are used.

The polycarbonates can be branched in an intentional and controlled manner through the use of small amounts of branching agents. Some suitable branching agents are: isatin bis-cresol, phloroglucinol, 4,6-dimethyl-2,4,6-tri-(4-hydroxyphenyl) heptene-2; 4,6-dimethyl-2,4,6-tri-(4-hydroxyphenyl) heptane; 1,3,5-tri-(4-hydroxyphenyl) benzene; 1,1,1-tri-(4-hydroxyphenyl) ethane; tri-(4-hydroxyphenyl) phenylmethane; 2,2-bis-[4,4-bis-(4-hydroxyphenyl)cyclohexyl] propane; 2,4-bis-(4-hydroxyphenyl isopropyl) phenol; 2,6-bis-(2-hydroxy-5'-methylbenzyl)-4-methylphenol; 2-(4-hydroxyphenyl)-2-(2,4-dihydroxyphenyl) propane; hex α-(4-(4-hydroxyphenyl isopropyl)phenyl) ortho-terephthalic acid ester; tetra-(4-hydroxyphenyl) methane; tetra-(4-(4-hydroxyphenyl isopropyl)phenoxy)methane; α,α',α"-tris-(4-hydroxyphenyl)-1,3,5-triisopropylbenzene; 2,4-dihydroxybenzoic acid; trimesic acid; cyanuric chloride; 3,3-bis-(3-methyl-4-hydroxyphenyl)-2-oxo-2,3-dihydroindole; 1,4-bis-(4',4"-dihydroxytriphenyl)methyl) benzene and in particular: 1,1,1-tri-(4-hydroxyphenyl) ethane and bis-(3-methyl-4-hydroxyphenyl)-2-oxo-2,3-dihydroindole.

The 0.05 to 2 mol%, relative to diphenols used, of branching agents or mixtures of branching agents which can optionally be used can be used together with the diphenols or also added at a later stage of the synthesis.

Chain terminators can be used. Phenols such as phenol, alkyl phenols such as cresol and 4-tert-butyl phenol, chlorophenol, bromophenol, cumyl phenol or mixtures thereof, in amounts of 1-20 mol%, preferably 2-10 mol%, per mol of bisphenol, are preferably used as chain terminators. Phenol, 4-tert-butyl phenol and cumyl phenol are preferred.

Chain terminators and branching agents can be added to the synthesis separately or together with the bisphenol.

The preferred polycarbonate according to the invention is bisphenol A homopolycarbonate.

The polycarbonates according to the invention can also be produced by the melt interesterification process as an alternative. The melt interesterification process is described for example in Encyclopedia of Polymer Science, Vol. 10 (1969), Chemistry and Physics of Polycarbonates, Polymer Reviews, H. Schnell, Vol. 9, John Wiley and Sons, Inc. (1964) and DE-B 10 31 512.

In the melt interesterification process the aromatic dihydroxy compounds already described in connection with the interfacial polycondensation process are interesterified in the melt with carbonic acid diesters with the aid of suitable catalysts and optionally further additives.

Carbonic acid diesters within the meaning of the invention are those of formulae (2) and (3) 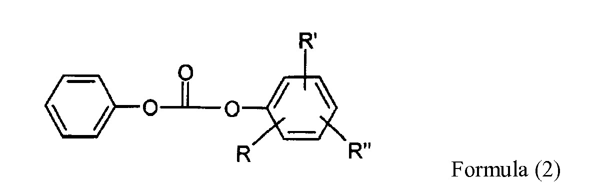 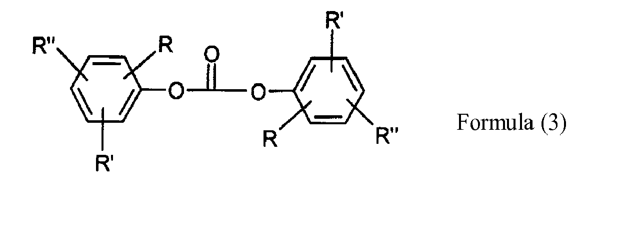 wherein
R, R' and R" can independently of one another denote H, optionally branched C₁-C₃₄ alkyl/cycloalkyl, C₇-C₃₄ alkaryl or C₆-C₃₄ aryl,
for example
diphenyl carbonate, butylphenyl phenyl carbonate, dibutylphenyl carbonate, isobutylphenyl phenyl carbonate, diisobutylphenyl carbonate, tert-butylphenyl phenyl carbonate, di-tert-butylphenyl carbonate, n-pentylphenyl phenyl carbonate, di-(n-pentylphenyl) carbonate, n-hexylphenyl phenyl carbonate, di-(n-hexylphenyl) carbonate, cyclohexylphenyl phenyl carbonate, dicyclohexylphenyl carbonate, phenylphenol phenyl carbonate, diphenylphenol carbonate, isooctylphenyl phenyl carbonate, diisooctylphenyl carbonate, n-nonylphenyl phenyl carbonate, di-(n-nonylphenyl) carbonate, cumylphenyl phenyl carbonate, dicumylphenyl carbonate, naphthylphenyl phenyl carbonate, dinaphthyl phenyl carbonate, di-tert-butylphenyl phenyl carbonate, di-(di-tert-butylphenyl) carbonate, dicumylphenyl phenyl carbonate, di-(dicumylphenyl) carbonate, 4-phenoxyphenyl phenyl carbonate, di-(4-phenoxyphenyl) carbonate, 3-pentadecylphenyl phenyl carbonate, di-(3-pentadecylphenyl) carbonate, tritylphenyl phenyl carbonate, ditritylphenyl carbonate,
preferably
diphenyl carbonate, tert-butylphenyl phenyl carbonate, di-tert-butylphenyl carbonate, diphenylphenol carbonate, cumylphenyl phenyl carbonate, diphenylphenol phenyl carbonate, cumylphenyl carbonate, particularly preferably diphenyl carbonate.

Mixtures of the cited carbonic acid diesters can also be used.

The proportion of carbonic acid esters is 100 to 130 mol%, preferably 103 to 120 mol%, particularly preferably 103 to 109 mol%, relative to the dihydroxy compound.

Basic catalysts, such as for example alkali and alkaline-earth hydroxides and oxides but also ammonium or phosphonium salts, hereinafter referred to as onium salts, as described in the cited literature are used in the melt interesterification process as catalysts within the meaning of the invention. Onium salts are preferably used here, particularly preferably phosphonium salts. Phosphonium salts within the meaning of the invention are those of formula (4) 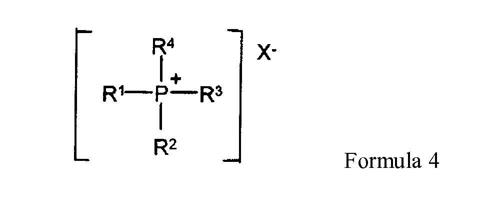 wherein
R¹⁻⁴ can be identical or different C₁-C₁₀ alkyls, C₆-C₁₀ aryls, C₇-C₁₀ aralkyls or C₅-C₆ cycloalkyls, preferably methyl, or C₆-C₁₄ aryls, particularly preferably methyl or phenyl, and
X⁻ can be an anion such as hydroxide, sulfate, hydrogen sulfate, hydrogen carbonate, carbonate, a halide, preferably chloride, or an alcoholate of the formula OR, wherein R can be C₆-C₁₄ aryl or C₇-C₁₂ aralkyl, preferably phenyl. Preferred catalysts are tetraphenyl phosphonium chloride, tetraphenyl phosphonium hydroxide, tetraphenyl phosphonium phenolate, and particularly preferably tetraphenyl phosphonium phenolate.

The catalysts are preferably used in amounts from 10⁻⁸ to 10⁻³ mol, relative to one mol of bisphenol, particularly preferably in amounts from 10⁻⁷ to 10⁻⁴ mol.

Further catalysts can be used alone or optionally in addition to the onium salt to increase the rate of polymerisation. These include salts of alkali metals and alkaline-earth metals, such as hydroxides, alkoxides and aryloxides of lithium, sodium and potassium, preferably hydroxide, alkoxide or aryloxide salts of sodium. Sodium hydroxide and sodium phenolate are most preferred.

The amounts of co-catalyst can be in the range from 1 to 200 ppb, preferably 5 to 150 ppb and most preferably 10 to 125 ppb, calculated in each case as sodium.

The interesterification reaction of the aromatic dihydroxy compound and the carbonic acid diester in the melt is preferably performed in two stages. In the first stage the aromatic dihydroxy compound and the carbonic acid diester are melted at temperatures of 80 to 250°C, preferably 100 to 230°C, particularly preferably 120 to 190°C, under normal pressure in 0 to 5 hours, preferably 0.25 to 3 hours. After adding the catalyst the oligocarbonate is produced from the aromatic dihydroxy compound and the carbonic acid diester by applying a vacuum (up to a pressure of 2.6 mbar in the apparatus) and raising the temperature (to up to 260°C) by distilling off the monophenol. Most of it is formed as process vapours. The oligocarbonate produced in this way has an weight-average molecular weight Mw (determined by measuring the relative solution viscosity in dichloromethane or in mixtures of equal amounts by weight of phenol/o-dichlorobenzene, calibrated by light scattering) in the range from 2000 g/mol to 18,000 g/mol, preferably 4000 g/mol to 15,000 g/mol.

In the second stage the polycarbonate is produced by polycondensation by further increasing the temperature to 250 to 320°C, preferably 270 to 295°C, under a pressure of < 2.6 mbar, the residual process vapours being removed.

The catalysts can also be used in combination (two or more) with one another.

If alkali metal/alkaline-earth metal catalysts are used, the alkali metal/alkaline-earth metal catalysts are preferably added later on (for example after oligocarbonate synthesis during polycondensation in the second stage).

Within the meaning of the process according to the invention the reaction of the aromatic dihydroxy compound and the carbonic acid diester to the polycarbonate can be performed batchwise or preferably continuously, for example in stirred-tank reactors, film evaporators, falling-film evaporators, series of stirred-tank reactors, extruders, compounders, simple disc reactors and high-viscosity disc reactors.

Branched polycarbonates or copolycarbonates can be produced by using polyfunctional compounds, in an analogous manner to the interfacial polycondensation process.

Further aromatic polycarbonates and/or other plastics such as aromatic polyesters, such as polybutylene terephthalate or polyethylene terephthalate, polyamides, polyimides, polyester amides, polyacrylates and polymethacrylates, such as for example polyalkyl (meth)acrylates and here in particular polymethyl methacrylate, polyacetals, polyurethanes, polyolefins, halogen-containing polymers, polysulfones, polyether sulfones, polyether ketones, polysiloxanes, polybenzimidazoles, urea-formaldehyde resins, melamine-formaldehyde resins, phenolformaldehyde resins, alkyd resins, epoxy resins, polystyrenes, copolymers of styrene or alphamethylstyrene with dienes or acrylic derivatives, graft polymers on the basis of graft copolymers based on acrylonitrile/butadiene/styrene or acrylate rubber (see for example the graft polymers described in EP-A 640 655) or silicone rubbers can also be added to the polycarbonates according to the invention in a known manner, for example by compounding.

Conventional additives for these thermoplastics, such as fillers, UV stabilisers, heat stabilisers, antistatic agents and dyes and pigments, can also be added in the conventional quantities to the polycarbonates according to the invention and to the further plastics which are optionally included; the demoulding behaviour and/or flow properties can optionally also be improved by the addition of external release agents and/or flow control agents (e.g. alkyl and aryl phosphites, phosphates, phosphanes, low-molecular-weight carboxylic acid esters, halo compounds, salts, chalk, silica flour, glass and carbon fibres, pigments and combinations thereof).

Such compounds are described for example in WO 99/55772 A1, p. 15 - 25, EP 1 308 084 and in the corresponding chapters of "Plastics Additives Handbook", ed. Hans Zweifel, 5th Edition 2000, Hanser Publishers, Munich.

Especially preferred additives are (tris(2,4-di-tert-butyl-phenyl) phosphite), (2,6-di-tert-butyl-4-(octadecanoxycarbonylethyl)phenol) and Pentaerythritol tetrastearate.

Suitable flameproofing agents for the compositons of the present invention are phosphorus-containing flameproofing agents, selected from the groups comprising the monomeric and oligomeric phosphoric and phosphonic esters, phosphonate amines, phosphonates, phosphinates, phosphites, hypophosphites, phosphine oxides and phosphazenes enter into consideration for example, in which connection mixtures of several components selected from one or various of these groups may find application as flameproofing agents.

Other, halogen-free, phosphorus compounds, not mentioned especially here, may also be employed, on their own or in arbitrary combination with other, halogen-free, phosphorus compounds. These also include purely inorganic phosphorus compounds such as boron phosphate hydrate. Furthermore, phosphonate amines enter into consideration by way of phosphorus-containing flameproofing agents. The production of phosphonate amines is described in US patent specification 5,844,028, for example. Phosphazenes and the production thereof are described, for example, in EP-A 728 811, DE-A 1 961 668 and WO 97/40092. Siloxanes, phosphorylated organosiloxanes, silicones or siloxysilanes may also find application as flameproofing agents, this being described in greater detail, for example, in EP 1 342 753, in DE 102 57 079 A and also in EP 1 188 792.

Phenyl tris-trimethylsiloxysilane (CAS No. 2116-84-9) has been employed within the scope of the present invention.

Within the scope of the present invention, phosphorus compounds of the general formula (4) are preferred 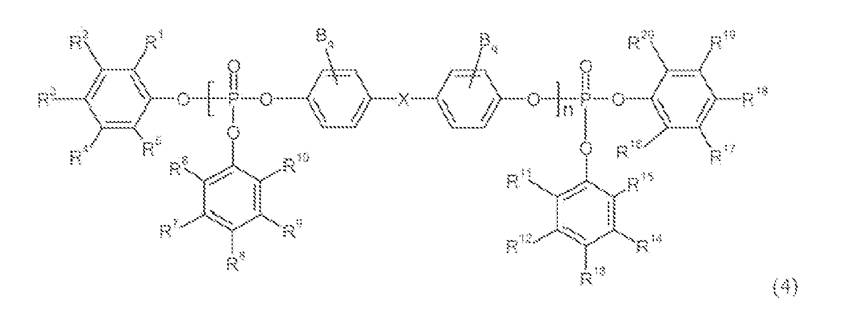 in which
R¹ to R²⁰ signify, independently of one another, hydrogen, a linear or branched alkyl group of up to 6 C atoms
N signifies an average value from 0.5 to 50 and
B signifies, in each instance, C₁-C₁₂ alkyl, preferentially methyl, or halogen, preferentially chlorine or bromine
Q signifies, in each instance, independently of one another, 0, 1 or 2
X signifies a single bond, C=O, S, O, SO₂, C(CH₃)₂, C₁-C₅ alkylene, C₂-C₅ alkylidene, C₅-C₆ cycloalkylidene, C₆-C₅₂ arylene, onto which further aromatic rings, optionally containing heteroatoms, may have been condensed, or a residue of the formula (5) or (6) 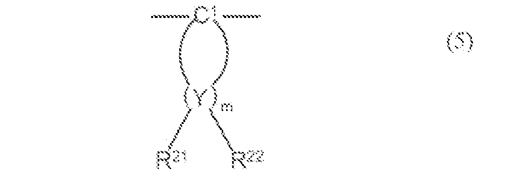 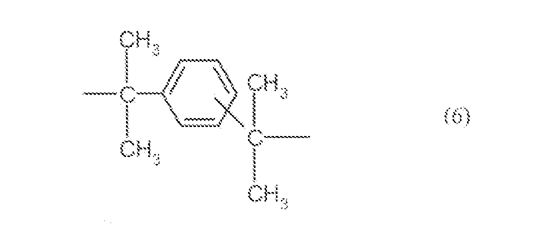
with Y carbon and
R²¹ and R²² signify, in individually selectable manner for each Y, independently of one another, hydrogen or C₁-C₆ alkyl, preferentially hydrogen, methyl or ethyl,
m signifies an integer from 4 to 7, preferably 4 or 5, with the proviso that R²¹ and R²² are simultaneously alkyl on at least one atom Y.

Particularly preferred are those phosphorus compounds of the formula (4) in which R¹ to R²⁰ signify, independently of one another, hydrogen or a methyl residue and in which q = 0. Particularly preferred are compounds in which X signifies SO₂, O, S, C=O, C₂-C₅ alkylidene, C₅-C₆ cycloalkylidene or C₆-C₁₂ arylene. Compounds with X = C(CH₃)₂ are quite particularly preferred.

The degree of oligomerisation n results as an average value from the process for producing the listed phosphorus-containing compounds. As a rule, the degree of oligomerisation in this process amounts to n < 10. Preferred are compounds with n from 0.5 to 5, particularly preferably 0.7 to 2.5. Quite particularly preferred are compounds that exhibit a high proportion of molecules with n = 1 between 60 % and 100 %, preferably between 70 % and 100 %, particularly preferably between 79 % and 100 %. By virtue of the production process, the above compounds may also contain small quantities of triphenyl phosphate. The quantities of this substance mostly amount to below 5 wt.%, with compounds that have a content of triphenyl phosphate within the range from 0 % to 5 %, preferably from 0 % to 4 %, particularly preferably from 0 % to 2.5 %, relative to the compound of the formula (4), being preferred in the present context.

The named phosphorus compounds are known (cf. e.g. EP-A 363 608, EP-A 640 655) or can be produced in analogous manner by known methods (e.g. Ullmanns Encyclopädie der technischen Chemie, Vol. 18, p 301 ff. 1979; Houben-Weyl, Methoden der organischen Chemie, Vol. 12/1, p 43; Beilstein Vol. 6, p 177).

Particular preferred within the scope of the present invention is bisphenol A diphosphate. Bisphenol A diphosphate is commercially available, inter alia, as Reofos^{®} BAPP (Chemtura, Indianapolis, USA), NcendX^{®} P-30 (Albemarle, Baton Rouge, Louisiana, USA), Fyroflex^{®} BDP (Akzo Nobel, Amheim, Netherlands) or CR 741^{®} (Daihachi, Osaka, Japan).

Further phosphoric esters that can be employed within the scope of the present invention are, in addition, triphenyl phosphate, which, inter alia, is offered for sale as Reofos^{®} TPP (Chemtura), Fyroflex^{®} TPP (Akzo Nobel) or Disflamoll^{®} TP (Lanxess), and resorcinol diphosphate. Resorcinol diphosphate can be purchased commercially as Reofos RDP (Chemtura) or Fyroflex^{®} RDP (Akzo Nobel).

The flameproofing agents may also be employed in combination with antimony trioxide.

The named flameproofing agents may be used on their own or in a mixture.

In this connection the present invention is not restricted to the named flameproofing agents; rather, further flame-inhibiting additives - as described, for example, in J. Troitzsch "International Plastics Flammability Handbook", Hanser Verlag, Munich 1990 - may also be employed.

Suitable metal hydroxides for use in compositions of the present invention are hydroxides of the general formulas (7) and (8)

Mₐ(OH)_{b} (7)

and

MₐO(OH)_{b} (8)

wherein a is 1 or 2 and b is 1, 2, or 3.

Preferably M is selected from the group consisting of Li, Na, K, Mg, Ca, Al, Zn and Fe.

In particular preferred M is Mg and b is 2.

In a preferred embodiment the polymer composition according to the invention furthermore contains an ultraviolet absorber. Ultraviolet absorbers that are suitable for use in the polymer composition according to the invention are compounds that possess as low a transmission as possible below 400 nm and as high a transmission as possible above 400 nm. Such compounds and the production thereof are known from the literature and are described, for example, in EP-A 0 839 623, WO-A 96/15102 and EP-A 0 500 496. Ultraviolet absorbers that are particularly suitable for use in the composition according to the invention are benzotriazoles, triazines, benzophenones and/or arylated cyanoacrylates.

Particularly suitable ultraviolet absorbers are hydroxybenzotriazoles, such as 2-(3',5'-bis(1,1-dimethylbenzyl)-2'-hydroxyphenyl)benzotriazole (Tinuvin^{®} 234, Ciba Spezialitätenchemie, Basel), 2-(2'-hydroxy-5'-(tert.-octyl)phenyl)benzotriazole (Tinuvin^{®} 329, Ciba Spezialitätenchemie, Basel), 2-(2'-hydroxy-3'-(2-butyl)-5'-(tert.butyl)phenyl)benzotriazole (Tinuvin^{®} 350, Ciba Spezialitätenchemie, Basel), bis(3-(2H-benztriazolyl)-2-hydroxy-5-tert.-octyl)methane, (Tinuvin^{®} 360, Ciba Spezialitätenchemie, Basel), (2-(4,6-diphenyl-1,3,5-triazine-2-yl)-5-(hexyloxy)phenol (Tinuvin^{®} 1577, Ciba Spezialitätenchemie, Basel), and also the benzophenones 2,4-dihydroxybenzophenone (Chimasorb^{®} 22, Ciba Spezialitätenchemie, Basel) and 2-hydroxy-4-(octyloxy)benzophenone (Chimassorb^{®} 81, Ciba, Basel), 2-propenoic acid, 2-cyano-3,3-diphenyl-, 2,2-bis[[(2-cyano-1-oxo-3,3-diphenyl-2-propenyl)oxy]methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) or tetraethyl-2,2'-(1,4-phenylenedimethylidene)bismalonate (Hostavin^{®} B-Cap, Clariant AG).

Mixtures of these ultraviolet absorbers may also be employed.

With regard to the quantity of the ultraviolet absorber contained in the composition there are no particular restrictions, so long as the desired absorption of UV radiation and also a sufficient transparency of the moulding produced from the composition are guaranteed. According to a preferred embodiment of the invention the composition contains ultraviolet absorbers in a quantity from 0.05 wt.% to 20.00 wt.%, more preferred from 0.07 wt.% to 10.00 wt.%, and especially preferred from 0.10 wt.% to 1.00 wt.% based on the sum of components A) to C).

### Production of the compositions:

Production of a composition containing polycarbonate, metal hydroxide and flameproofing additive is effected by standard incorporation processes and may, for example, be effected by mixing of dispersions or solutions of the flameproofing additive and/or the metal hydroxide with a solution of polycarbonate in suitable solvents such as dichloromethane, haloalkanes, haloaromatics, chlorobenzene and xylolene. The substance mixtures are then preferably homogenised in known manner by extrusion. The solution mixtures are preferably reworked - compounded, for example - in known manner by evaporating the solvent and by subsequent extrusion.

In addition, the composition may be mixed in conventional mixing appliances such as screw extruders (for example, twin-screw extruders), kneaders, Brabender or Banbury mills, and subsequently extruded. After the extrusion, the extrudate can be cooled and crushed. Individual components may also be premixed, and then the remaining initial substances may be added individually and/or likewise in the mixed state.

The compositions according to the invention may be reworked in known manner and processed into arbitrary moulded articles, for example by extrusion, injection moulding or extrusion blow moulding.

In the production of sheets according to the present invention the polycarbonate pellets of the base material are fed to the feed hopper of the main extruder and are melted and transported in the respective cylinder/screw plasticising system and after leaving the nozzle is cooled to form a sheet. The additional equipment serves to transport, cut to length and stack the extruded sheets.

Sheets with a coextruded layer are produced in the corresponding manner, by running a coextruder.

Blow moulding of polycarbonate is described in more detail inter alia in DE 102 29 594 and in the literature cited therein.

### Flame-resistance tests

Many different flameproofing tests are known. In the present case the flame resistance of plastics is determined by means of the UL94V method (see in this regard:
a) Underwriters Laboratories Inc. Standard of Safety, "Test for Flammability of Plastic Materials for Parts in Devices and Appliances", p. 14 ff, Northbrook 1998;
b) J. Troitzsch, "International Plastics Flammability Handbook", p. 346 ff, Hanser Verlag, Munich 1990)

The burning times and dripping behaviour of ASTM standard test pieces are evaluated.

For the classification of a flameproofed synthetic material in Flammability Class UL94V-0, in detail the following criteria have to be satisfied: in a set of 5 ASTM standard test specimens (dimensions: 127 mm x 12.7 mm x X mm, with X = thickness of test specimen, e.g. 3.0, 1.5, 0.8 mm) all the specimens must not burn for longer than 10 seconds after two flame treatments of 10 seconds duration with an open flame of defined height. The sum of the burning-times in the case of 10 flame treatments of 5 samples must not be greater than 50 seconds. In addition, burning dripping, complete burning-away or afterglowing of the respective test specimen must not occur for longer than 30 seconds. The classification UL94V-1 requires that the individual burning-times do not amount to longer than 30 seconds and that the sum of the burning-times of 10 flame treatments of 5 samples is not greater than 250 seconds. The total afterglow time must not amount to more than 250 seconds. The remaining criteria are identical with those mentioned above. Classification in Flammability Class UL94V-2 obtains when burning dripping occurs in the case where the remaining criteria of classification UL94V-1 are satisfied.

The combustibility of test specimens may, furthermore, also be appraised by determination of the oxygen index (LOI according to ASTM D 2863-77).

### Rheological properties:

The melt flow rate (MVR) - unless otherwise indicated in the present invention - is determined in accordance with ISO 1133 over (10 min) at 300°C and under a load of 1.2 kg.

Solution viscosities can be ascertained, for example, in accordance with standard ISO 1628-1/-4.

### Optical measurements:

The haze and transmission were measured on sheets measuring 60 x 40 x X mm³ in accordance with ISO 13468, wherein X is 1, 2, 3 or 4.

### Particle size measurements:

The average particle diameter (d₅₀ value), in particular of component C), is determined by sedimentation in an aqueous medium using a Sedigraph 5100, Micrometrics Instruments Corporation, Norcross, Georgia, USA.

### Production of the compositions:

The compositions according to the present invention are compounded in a device comprising a metering unit for the components, a co-rotating twin-screw compounder (ZSK 25 from Werner & Pfleiderer) having a screw diameter of 25 mm, a perforated nozzle for extruding the melt strands, a water bath for cooling and solidifying the strands, and a pelletiser.

For the production of the compositions of examples 1 to 12 in the compounding equipment described above, the following components were used:

### Component A-1

Linear polycarbonate based on bisphenol A having a melt volume-flow rate (MVR) as defined in ISO 1133 is 12,5 cm³/(10 min) 300°C and under a load of 1.2 kg.

### Component A-2

Linear polycarbonate based on bisphenol A having a melt volume-flow rate (MVR) as defined in ISO 1133 is 16,5 cm³/(10 min) at 250°C and under a load of 2.16 kg.

### Component B

Oligophosphate based on bisphenol A

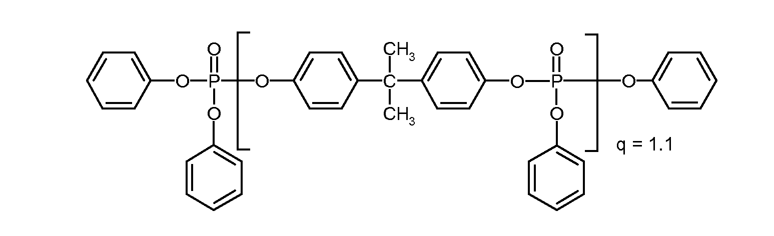

### Component C

Magnesium hydroxide having an particle size d₅₀ of 1,6 - 2,0 µm and a density of 2,4 g/cm³.

### Component D

C4, Bayowet^{®}C4 is a potassium nonafluoro-1-butane sulfonate which is commercially available from Lanxess AG.

### Component E

Phosphite stabilizer, Irganox® B900 (mixture of 80 % Irgafos® 168 and 20 % Irganox® 1076; BASF AG; Ludwigshafen / Irgafos® 168 (tris(2,4-di-tert-butyl-phenyl) phosphite) / Irganox® 1076 (2,6-di-tert-butyl-4-(octadecanoxycarbonylethyl)phenol)

### Component F

### Pentaerythritol tetrastearate

In the course of production of the compounds in Examples 1-11 the procedure is such that to component A-1 granulate 5 pbw of a powder mixture consisting of component A-2 powder, which contains the substances C, D, E and F named in the Examples, is added in metered amounts while liquid component B is pumped into the extruder, so that the mixtures (compounds) named in the Examples result.

The compounds of examples 1 to 11 are then processed into test pieces measuring 127 x 12.7 x D mm³ (D [thickness in mm] = 3.0, 1.5 and 0.8) for flameproofing measurements and 60 x 40 x 4 mm³ for optical measurements, using an Arburg Allrounder 270S-500-60 having a screw diameter of 18 mm.

### Examples

| **Process parameter** | **Compounds from Examples 1 to 11** |
|---|---|
| **Extruder heating zones** | |
| Extruder Z1 | 290 °C |
| Extruder Z2 | 295 °C |
| Extruder Z3 | 300 °C |
| Extruder Z4 | 300 °C |
| **Tool temperature** | 95 °C |
| Injection pressure (max.) | 1600 bar |
| Holding pressure (supporting point 1) | 1200 bar |
| Holding pressure (supporting point 2) | 1000 bar |
| Holding pressure (supporting point 3) | 800 bar |
| Back pressure | 100 bar |

The flameproofing test was conducted in accordance with UL 94 V. Two sets of 5 UL test pieces (a total of 10 UL test pieces being tested) were measured in accordance with UL94V, with one set being measured after being stored for 48 hours in 50% relative humidity at 23°C, the other set being measured after being stored for 7 days at 70°C in a hot-air oven.

The compositions and the results are shown in table 1:

**Table 1**

| | 1(c) | 2(c) | 3(c) | 4(c) | 5(c) | 6 | 7 | 8 | 9 | 10(c) | 11 | 12 | 13 |
|---|---|---|---|---|---|---|---|---|---|---|---|---|---|
| A1 | 95 | 95 | 85 | 85 | 85 | 85 | 85 | 85 | 85 | 85 | 75 | 83 | 80 |
| A2 | 5 | 5 | 5 | 5 | 5 | 5 | 5 | 5 | 5 | 5 | 5 | 5 | 5 |
| B | - | - | 10 | 10 | 10 | 10 | 10 | 10 | 10 | 10 | 20 | 12 | 15 |
| C | 2 | 2 | - | - | 1 | 1.5 | 2 | 3 | 4 | 5 | 2 | 3 | 3 |
| D | - | 0.12 | - | 0.12 | - | - | - | - | - | - | - | 0 | 0 |
| E | 0.1 | 0.1 | 0.1 | 0.1 | 0.1 | 0.1 | 0.1 | 0.1 | 0.1 | 0.1 | 0.1 | 0.1 | 0.1 |
| F | 0.4 | 0.4 | 0.4 | 0.4 | 0.4 | 0.4 | 0.4 | 0.4 | 0.4 | 0.4 | 0.4 | 0.4 | 0.4 |
| UL94 3.0mm | V2 | V2 | V2 | V2 | V2 | V0 | V0 | V0 | V0 | V0 | V0 | V0 | V0 |
| UL94 1.5mm | V2 | V2 | V2 | V2 | - | V2 | V0 | V0 | V0 | V0 | V0 | V0 | V0 |
| UL94 0.8mm | V2 | V2 | V1 | V2 | - | - | V0 | V0 | V0 | V0 | V0 | V0 | V0 |
| MVR 260C/2.16 kg/ 10 min | 13.7 | 13.4 | 17.3 | 16.7 | 33.0 | 45.0 | 45.0 | 51.0 | 60.0 | 49.0 | 147.0 | 60.8 | 85.5 |
| Transmissi | | | | | | | | | | | | | |
| 1mm | 84.2 | 81.5 | 87.7 | 87.8 | 86.0 | 85.3 | 85.1 | 84.8 | 83.7 | 83.0 | 85.1 | 83.2 | 83.1 |
| 2mm | 79.6 | 74.0 | 85.7 | 86.9 | 82.2 | 81.3 | 81.4 | 79.9 | 78.7 | 77.4 | 81.2 | 78.2 | 78.1 |
| 3mm | 75.5 | 67.3 | 83.7 | 85.2 | 79.8 | 78.0 | 78.0 | 75.8 | 74.0 | 72.1 | 77.5 | 73.7 | 73.4 |
| 4mm | 72.1 | 61.4 | 81.8 | 81.3 | 76.4 | 75.4 | 75.4 | 72.0 | 69.3 | 66.6 | 74.4 | 69.1 | 68.8 |
| Haze | | | | | | | | | | | | | |
| 1mm | 29 | 39 | 2 | 2 | 20 | 27 | 29 | 38 | 46 | 55 | 33 | 44.5 | 47.6 |
| 2mm | 46 | 60 | 4 | 3 | 34 | 45 | 46 | 57 | 68 | 77 | 55 | 66.1 | 68.6 |
| 3mm | 58 | 72 | 6 | 5 | 45 | 57 | 58 | 67 | 76 | 87 | 66 | 77.6 | 79.7 |
| 4mm | 65 | 81 | 8 | 9 | 54 | 64 | 65 | 74 | 83 | 92 | 75 | 83.8 | 86.5 |

## Claims

1. Flame-retardant composition containing
A. 70.0 to 100.0 pbw at least one polycarbonate,
B. 5.0 to 25.0 pbw at least one phosphorous-based flame retardant,
C. 1.5 to 4.5 pbw of one or more metal hydroxides.

2. Composition according to claim 1, **characterised in that** component C is present in 2.0 to 4.0 pbw.

3. Composition according to claim 1, **characterised in that** component C is at least one metal hydroxides of the general formula
Mₐ(OH)_{b} (7)
and /or
MₐO(OH)_{b} (8)
wherein a is 1 or 2 and b is 1, 2, or 3.

4. Composition according to claim 3, **characterised in that** M is selected from the group consisting of Li, Na, K, Mg, Ca, Al, Zn and Fe.

5. Composition according to claim 1, **characterised in that** component C is Mg(OH)₂.

6. Composition according to one of the preceding claims, **characterized in that** the flame retardant B is present in an amount from 12 to 16 pbw.

7. Composition according to one of the preceding claims, **characterised in that** the composition contains at least on further additive selected from the group consisting of UV stabilisers, heat stabilisers, antistatic agents, dyes, pigments and mold release agents.

8. Composition according to one of the preceding claims, **characterised in that** the composition has an UL-rating of V0 for samples of a thickness of 0.8 mm.

9. Composition according to one of the preceding claims, **characterised in that** the composition is free of nona-fluoro-1-butanesulfonate-based flame retardants.

10. Composition according to one of the preceding claims, **characterised in that** the polycarbonate has an average molecular weight M̅_{w} of 2000 to 200,000, preferably 3000 to 150,000, in particular 5000 to 100,000, most particularly preferably 10,000 to 30,000, in particular 10,000 to 28,000, and most particularly preferably average molecular weights M̅_{w} of 12,000 to 28,000 g/mol.

11. Composition according to one of the preceding claims, **characterised in that** the phosphorous-based flame retardant is selected from the group consisting of triphenyl phosphate, resorcinol diphosphate and bisphenol-A bis(diphenylphosphate).

12. Composition according to one of the preceding claims, **characterised in that** it is free of polytetrafluoroethylene or a polytetrafluoroethylene blend as antidripping agent.

13. Product containing a composition according to one of claims 1 to 12.

14. Use of the compositions according to one of claims 1 to 12 for the production of mouldings in the electrical/electronics sector, lamp housings, circuit breakers, plug connectors, television or monitor housings, of sheets for architectural or industrial glazing systems or as cladding for rail vehicle and aircraft interiors, the mouldings preferably being produced by injection moulding.

15. Flame-retardant composition consisting of
A. 70.0 to 100.0 pbw at least one polycarbonate,
B. 5.0 to 25.0 pbw at least one phosphorous-based flame retardant,
C. 1.5 to 4.5 pbw of one or more metal hydroxides
D. optional further additives selected from the group consisting of UV stabilisers, heat stabilisers, antistatic agents, dyes, pigments and mold release agents.
